# EUROPÄISCHE PATENTSCHRIFT

(11) **EP 1 327 784 B1**
(45) Veröffentlichungstag und Bekanntmachung des Hinweises auf die Patenterteilung: **11.05.2005**
(21) Anmeldenummer: 03000522.7
(22) Anmeldetag: 09.01.2003
(51) Int. Cl.: F16B 41/00

(54) **Vormontagehalterung für Schrauben**
Pre-mounting device for screws
Dispositif de prémontage pour vis

(30) Priorität: 12.01.2002 DE 20200414 U
(43) Veröffentlichungstag der Anmeldung: 16.07.2003
(73) Patentinhaber: Mann + Hummel GmbH, 71638 Ludwigsburg (DE)
(72) Erfinder: Jainek, Herbert, 74074 Heilbronn (DE)
(74) Vertreter: Voth, Gerhard, Dipl.-Ing.

(56) Entgegenhaltungen:
- DE-A- 4 302 506
- DE-A- 19 650 035
- US-A- 3 115 356

## Beschreibung

### Gebiet der Erfindung

Die vorliegende Erfindung betrifft ein Bauteil als Vormontagehalterung für Schrauben. Insbesondere betrifft die Erfindung eine solches Bauteil in der die Schrauben verliersicher angebracht sind (DE 19650035 A).

### Hintergrund der Erfindung, Stand der Technik

Üblicherweise werden Deckel, Gehäuse, Module und dgl. durch nachträgliches Handbestücken mit Befestigungsschrauben versehen. Diese Schrauben werden meist erst bei der Endmontage, bspw. bei der Motormontage eines Kraftfahrzeuges, zugeführt, und mit einem Drehmomentschrauber einzeln verschraubt. Werden die Schrauben bereits beim Zulieferer, bspw. dem Lieferanten eines Ölmoduls für Kraftfahrzeuge, in das Modul eingesetzt, so hat dieses Verfahren den Nachteil, dass die so eingesteckten Schrauben beim Transport zu einem Kunden aus den Halterungen herausfallen können, so dass diese Prozedur beim eigentlichen Einbau wiederholt werden muss. Zudem enstehen auf diese Weise Folgekosten durch die verlorenen Schrauben.

Bei der Endmontage von Produkten die in hohen Stückzahlen hergestellt werden kommen Bestückungsautomaten zum Einsatz, diese sind jedoch sehr Kostenintensiv und neigen sehr häufig zu Störungen.

Es ist deshalb vorgeschlagen worden, Vormontagehalterungen für Schrauben herzustellen, in denen die Schrauben durch eine Dichtung, bspw. aus einem elastischen Material bis zur endgültigen Verabeitung verliersicher festgehalten werden. So beschreibt bspw. die DE 196 50 035 A1 eine Vormontagehalterung für Schrauben, die aus einem Aufvulkanisieren der Durchsteck-Bohrung eines Gehäuses besteht. Die in diese Bohrungen eingesteckten Schrauben werden auf diese Weise verliersicher gehalten. Die Auskleidung der Bohrung weist ein mit der Öffnung verbundenes Elastomer auf und hat einen Durchmesser, der kleiner ist als der Schraubendurchmesser.

Nachteilig an dieser Anordnung ist, dass die Schraube soweit eingesteckt bzw. eingeschraubt wird, dass ihre Stirnfläche bündig mit der Abdichtseite ist. Auf diese Weise ist nicht immer gewährleistor, dass die Zentrierspitze für den Kunden eingriffsbereit ist. Zudem ist bei dieser Anordnung die Auskleidung mit der Öffnung fest verbunden und erfordert ein Einspritzen der Dichtung in die entsprechende Dichtungsnut, was die Herstellung verteuert. Bei Modulen, die bereits eine Flanschdichtung aufweisen (bspw. Ölmodule und dgl.), wird also die Sicherungsgeometrie nahezu kostenneutral hergestellt.

### Zusammenfassung der Erfindung

Es ist daher die Aufgabe der vorliegenden Erfindung, die genannten Nachteile des Standes der Technik zu vermeiden und eine kostengünstig herstellbare Vormontagehalterung für Schrauben zu schaffen, die eine einfache und verlässliche Halterung der Schrauben beim Transport gewährleistet, sowie die Flanschdichtung durch Überstand der Zentrierspitzen geschützt.

Diese und weitere Aufgaben werden durch eim Bauteil nach Anspruch 1 gelöst.

Weitere vorteilhafte Ausgestaltungen sind in den Unteransprüchen enthalten.

### Kurze Beschreibung der Zeichnungen

Die Erfindung wird im folgenden anhand der Zeichnungen näher erläutert. Dabei zeigt
- Fig. 1: schematisch eine erfindungsgemässe Vormontagehalterung vor dem Einbringen der Schraube;
- Fig. 2: schematisch eine erfindungsgemässe Vormontagehalterung nach dem Einschieben der Schraube;
- Fig. 3: schematisch eine erfindungsgemässe Vormontagehalterung, bei der die eingeschobene Schraube in ihrer Endposition liegt; und
- Fig. 4: eine Aufsicht auf ein Ölmodul mit erfindungsgemässen Vormontagehalterungen.

### Detaillierte Beschreibung der Ausführungsbeispiele

Bei dem mit Befestigungsschrauben zu bestückenden Bauteil kann es sich bspw. um einen Ölfilter für ein Kraftfahrzeug handeln. Die Erfindung ist jedoch nicht darauf beschränkt, sondern kann überall dort angewendet werden, wo Befestigungsschrauben in ein Bauteil eingebracht werden sollen. Zweckmäßig ist die Erfindung dort, wo bereits eine elastomere Flanschdichtung eingesetzt wird. Der Einfachkeit halber wird die Erfindung im folgenden jedoch anhand eines Ölfilters beschrieben.

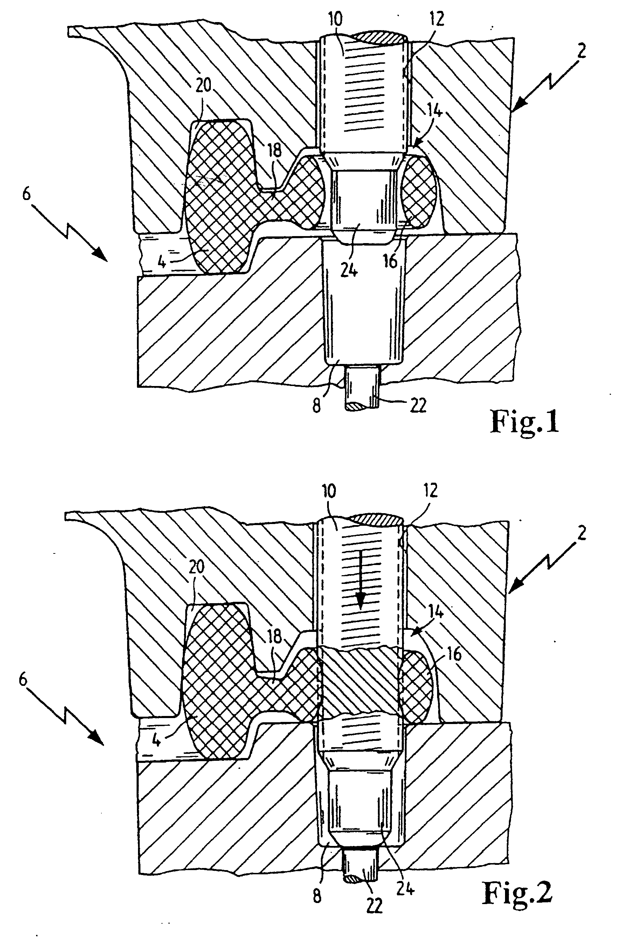

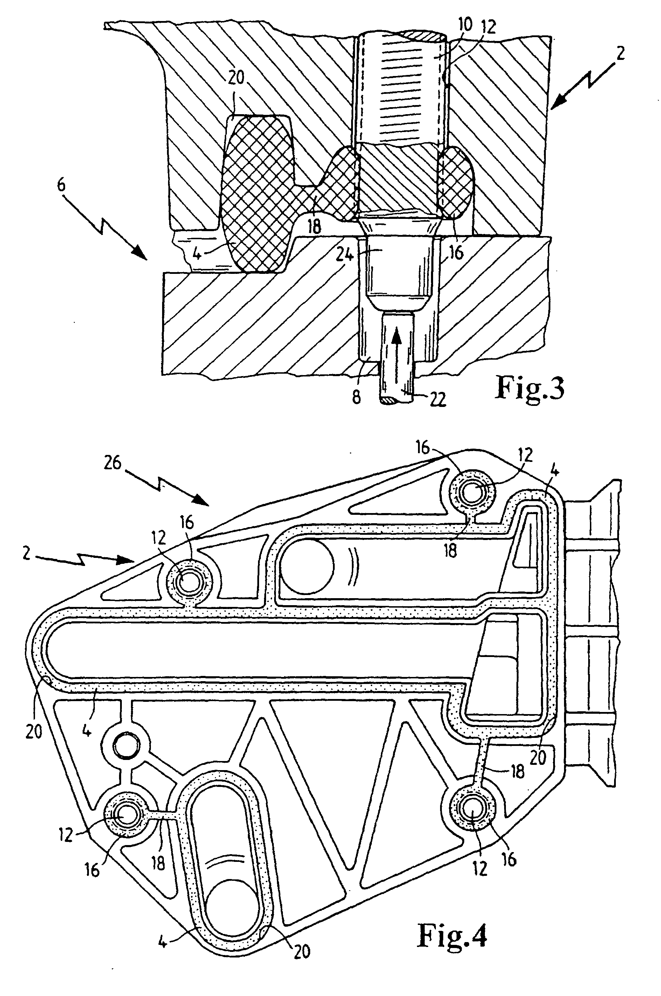

Zunächst wird in den Ölfilteranschlußflansch 2 des Ölfilters eine Flanschdichtung 4 eingelegt, dass heisst, vormontiert. Dann wird der gesamte Ölfilter mit seinem Anschlußflansch 2 auf einen Werkstückträger 6 aufgelegt. Der Werkstückträger 6 hat die in Figur 1 gezeigte Kontur. Der Träger kann auch dazu dienen, die Dichtheit des Filterelements zu prüfen, da ja die Flanschdichtung 4 bereits aufliegt und Dichtfunktion übernimmt. Der Vorteil liegt dabei darin, dass man keinen zusätzlichen Werkstückträger für das Vormontieren der Schrauben mehr benötigt, sondern bspw. parallel zur Dichtheitsprüfung die Schrauben vormontiert. Der Werkstückträger 6 weist eine Öffnung 8 zur vorübergehenden Aufnahme der Spitze einer Befestigungsschraube 10 (nur teilweise gezeigt) auf. Nachdem nun der Ölfilter mit seinem Anschlussflansch 2 in der in Figur 1 gezeigten Stellung auf den Werkstückträger 6 aufgelegt ist, werden eine oder mehrere Schrauben 10 von oben her durch eine vorgefertigte Durchsteckbohrung 12 eingesteckt und, wie in Figur 2 gezeigt, nach unten in die Öffnung 8 des Werkstückträgers 6 durchgedrückt, bis die Schraube den Boden der Öffnung 8 erreicht. Der untere Bereich der Durchsteckbohrung 12 ist kegelförmig erweitert und bildet auf diese Weise einen Kammerbereich 14. In diesem Kammerbereich ist um jede Durchsteckbohrung 12 ein Klemmelement 16 ringförmig angeordnet. Bei diesem Klemmelement kann es sich bspw. um Klemmringe handeln. Diese Klemmringe 16 können bspw. aus einem Elastomer bestehen. Der Durchmesser der Klemmringe 16 ist dabei geringfügig kleiner als der Durchmesser der Durchsteckbohrung 12. Die kreisförmigen Klemmringe 16 können mit der Flanschdichtung 4 durch Verbindungsstege 18 verbunden sein (vgl. Figur 4). Die Verbindungsstege 18 sind bevorzugt mäanderförmig ausgestaltet, damit bei einem geringem Abheben der Klemmringe 16 die Flanschdichtung 4 nicht gleichermassen aus der Nut 20, in die sie eingebettet ist, gehebelt wird.

Fig. 2 zeigt die erfindungsgemässe Anordnung, nachdem die Schraube 10 den Boden der Öffnung 8 erreicht hat. Der Klemmring 16 wird dabei im Gewindegang der Schraube radial etwas aufgezogen, liegt aber weiterhin im unteren Teil des Kammerbereiches 14.

Anschliessend hebt, wie in Figur 3 gezeigt, ein unter der Öffnung 8 auf dem Werkstückträger 6 angebrachter Stößel 22 oder eine entsprechende Anhebevorrichtung die Schraube 10 an, d.h., die Schraube wird entgegen der Durchsteckrichtung bewegt. Der Stößel 22 kann bspw. pneumatisch oder hydraulisch nach oben bewegt werden. Mit dem Hochdrücken der Schraube 10 wird gleichzeitig der Klemmring 16 ebenfalls in diese Richtung bewegt und es kommt zu einer keilförmigen Verspannung, da sich die Klemmring 16 wie ein Keil in den nach oben kegelförmig zulaufenden Kammerbereich 14 schiebt. Dadurch wird der Klemmring 16 im Konus festgeklemmt, die Schraube 10 ist somit verliersicher in der Durchsteckbohrung 12 gesichert, und kann mit dem gesamten Ölfilter zum Endmontageort transportiert werden. Die Zentrierspitze 24 der Schraube 10 liegt damit eingriffsbereit und mit einem Überstand fest, so dass sie sich bei der endgültigen Montage des Ölfilters direkt in der richtigen Montageposition befindet.

Die Montage des Ölfilters am Motor erfolgt dadurch, dass ein Mehrfachschrauber alle (im vorliegenden Beispiel vier) Schrauben gleichzeitig eindreht (vgl. Figur 4). Die Verwendung eines Mehrfachschraubers hat den Vorteil, dass die Flanschdichtung 4 gleichmässig verpresst wird. Würden die Schrauben nacheinander angezogen, so würde auch die Dichtung ungleichmässig belastet.

Fig. 4 zeigt nochmals ein Ölmodul 26 mit einer in eine entsprechende Dichtungsnut 20 (teilweise) eingelegten Flanschdichtung 4. Die Durchsteckbohrungen 12 weisen dabei erfindungsgemässe Klemmringe 16 auf, die über Verbindungsstege 18 mit der Flanschdichtung 4 verbunden sind. Somit sind die Klemmringe 16 ebenfalls unverlierbar als Teil der Flanschdichtung 4 ausgebildet.

Die erfindungsgemässe Vormontagehalterung hat den Vorteil, dass durch die bereits verliersicher vormontierten Schrauben keine Bestückung am endgültigen Montageort, also bspw. beim Kunden, mehr erfolgen braucht. Ein weiterer Vorteil liegt daran, dass Mehrfachschrauben einsetzbar sind, so dass eine bessere Verspannung der Dichtung erfolgt. Weiterhin wird die Dichtung sowohl beim Transport als auch bei der Endmontage besser geschützt, da die Zentrierspitzen einen Überstand aufweisen und somit die Dichtung nicht über den Motorblock geschoben wird.

## Patentansprüche

1. Bauteil insbesondere Ölfilteranschlussflansch (2) mit Schrauben (10) die in durchsteckbaren Öffnungen (12) angeordnet sind, wobei die Durchstecköffnungen (12) ein im wesentlichen ringförmiges Dichtelement (16) aufweisen, **gekennzeichnet dadurch daß** das Dichtelement (16) in einem im wesentlichen kegelförmig ausgebildeten Kammerbereich (14) der Durchstecköffnung (12) angeordnet ist und das Bauteil in einer Vormontagehalterung zur lagerichtigen Montage der Schraube (10) aufnehmbar ist.

2. Bauteil nach Anspruch 1, **dadurch gekennzeichnet, dass** es sich bei dem Dichtelement (16) um einen Klemmring handelt.

3. Bauteil nach Anspruch 1 oder 2, **dadurch gekennzeichnet, dass** das Dichtelement aus einem Elastomer besteht.

4. Bauteil nach einem der Ansprüche 1 bis 3, **dadurch gekennzeichnet, dass** das Dichtelement (16) über Verbindungsstege (18) mit einer auf der Oberfläche des Bauteils angeordneten Flanschdichtung (4) verbunden ist.

5. Bauteil nach einem der vorstehenden Ansprüche, **dadurch gekennzeichnet, dass** das Bauteil ein Ölfilter ist.

6. Bauteil nach einem der vorstehenden Ansprüche, **dadurch gekennzeichnet, dass** der Durchmesser des Dichtelements (16) geringfügig kleiner als der Gewindeaussendurchmesser der Schraube ist.

7. Bauteil nach einem der vorstehenden Ansprüche, **dadurch gekennzeichnet, dass** die Schraube (10) bei einer Bewegung entgegen der Durchsteckrichtung in dem Kammerbereich (14) mit dem Dichtelement (16) verklemmbar ist.

8. Bauteil nach Anspruch 4, **dadurch gekennzeichnet, dass** die Verbindungsstege (18) mäanderförmig ausgebildet sind.

9. Bauteil nach einem der vorstehenden Ansprüche, **dadurch gekennzeichnet, dass** das Bauteil bei der Vormontage der Schrauben (10) auf einen Werkstückträger (6) auflegbar ist.

10. Bauteil nach Anspruch 9, **dadurch gekennzeichnet, dass** der Werkstückträger (6) eine Öffnung (8) zur Aufnahme der Spitze (24) der Schraube (10) aufweist.

11. Bauteil nach einem der vorstehenden Ansprüche, **dadurch gekennzeichnet, dass** die Schraube (10) durch eine Anhebevorrichtung (22) entgegen der Einsteckrichtung oder über eine Zugvorrichtung mittels des Schraubenkopfes anhebbar ist.

12. Bauteil nach Anspruch 11, **dadurch gekennzeichnet, dass** die Anhebevorrichtung (22) ein Stößel ist.

13. Bauteil nach Anspruch 11 oder 12, **dadurch gekennzeichnet, dass** die Anhebevorrichtung (22) pneumatisch oder hydraulisch bewegbar ist.

## Claims

1. Component part more especially oil filter connecting flange (2) including screws (10), which are disposed in through-openings (12), wherein the through-openings (12) include a substantially annular-shaped sealing element (16), **characterised in that** the sealing element (16) is disposed in a substantially cone-shaped chamber region (14) of the through-opening (12) and the component part is includable in a pre-assembly mounting for the correct positioning of the screw (10).

2. Component part according to claim 1, **characterised in that** the sealing element (16) is a clamping ring.

3. Component part according to claim 1 or 2, **characterised in that** the sealing element is produced from an elastomer.

4. Component part according to one of claims 1 to 3, **characterised in that** the sealing element (16) is connected to a flange seal (4), which is disposed on the surface of the component part, via connecting webs (18).

5. Component part according to one of the preceding claims, **characterised in that** the component part is an oil filter.

6. Component part according to one of the preceding claims, **characterised in that** the diameter of the sealing element (16) is slightly smaller than the outside diameter of the thread of the screw.

7. Component part according to one of the preceding claims, **characterised in that** the screw (10) is clampable to the sealing element (16) in the chamber region (14) with a movement in opposition to the direction of insertion.

8. Component part according to claim 4, **characterised in that** the connecting webs (18) are meander-shaped.

9. Component part according to one of the preceding claims, **characterised in that** the component part can be placed onto a workpiece carrier (6) for the preliminary assembly of the screws (10).

10. Component part according to claim 9, **characterised in that** the workpiece carrier (6) includes an opening (8) for receiving the tip (24) of the screw (10).

11. Component part according to one of the preceding claims, **characterised in that** the screw (10) is raisable via a lifting device in opposition to the direction of insertion or via a pulling device by means of the screw head.

12. Component part according to claim 11, **characterised in that** the lifting device (22) is a plunger.

13. Component part according to claim 11 or 12, **characterised in that** the lifting device (22) is moveable in a pneumatic or hydraulic manner.

## Revendications

1. Compoant, en particulier bride de raccordement d'un filtre à huile (2), comprenant des vis (10) disposées dans des ouvertures de traversée (12), ouvertures qui comportent un élément d'étanchéité (16) de forme essentiellement annulaire,
**caractérisé en ce que**
l'élément d'étanchéité (16) est disposé dans une zone de chambre (14), constituée essentiellement sous forme conique, de l'ouverture de traversée (12), et le composant peut être logé dans une fixation de pré-montage en vue du montage, en position correcte, de la vis (10).

2. Composant selon la revendication 1,
**caractérisé en ce que**
l'élément d'étanchéité (16) est un anneau de serrage.

3. Composant selon la revendication 1 ou 2,
**caractérisé en ce que**
l'élément d'étanchéité se compose d'un élastomère.

4. Composant selon l'une des revendications 1 à 3,
**caractérisé en ce que**
l'élément d'étanchéité (16) est relié, par des passerelles de liaison (18), à une garniture à bride (4) disposée à la surface du composant.

5. Composant selon l'une des revendications précédentes,
**caractérisé en ce que**
le composant est un filtre à huile.

6. Composant selon l'une des revendications précédentes,
**caractérisé en ce que**
le diamètre de l'élément d'étanchéité (16) est légèrement plus petit que le diamètre extérieur du filetage de la vis.

7. Composant selon l'une des revendications précédentes,
**caractérisé en ce que**
la vis (10) peut, lors d'un déplacement en sens contraire de la direction de traversée, être bloquée, dans la zone de chambre (14), avec l'élément d'étanchéité (16).

8. Composant selon la revendication 4,
**caractérisé en ce que**
les passerelles de liaison (18) sont constituées en forme de méandres.

9. Composant selon l'une des revendications précédentes,
**caractérisé en ce que**
l'élément de construction peut être posé, lors du pré-montage des vis (10), sur un support de pièce à usiner (6).

10. Composant selon la revendication 9,
**caractérisé en ce que**
le support de pièce à usiner (6) comporte une ouverture (8) en vue d'accueillir la pointe (24) de la vis (10).

11. Composant selon l'une des revendications précédentes,
**caractérisé en ce que**
la vis (10) peut être décollée par un dispositif de décollement (22) en sens contraire de la direction d'insertion, ou encore au moyen de la tête de vis par l'intermédiaire d'un dispositif de traction.

12. Composant selon la revendication 11,
**caractérisé en ce que**
le dispositif de décollement (22) est un coulisseau.

13. Composant selon la revendication 11 ou 12,
**caractérisé en ce que**
le dispositif de décollement (22) peut être mis en mouvement par voie pneumatique ou hydraulique.
